(19) **Europäisches Patentamt**
**European Patent Office**
**Office européen des brevets**

(11) **EP 2 902 695 A1**

(12) **EUROPEAN PATENT APPLICATION**
published in accordance with Art. 153(4) EPC

(43) Date of publication:
**05.08.2015 Bulletin 2015/32**

(21) Application number: **13842020.3**

(22) Date of filing: **07.08.2013**

(51) Int Cl.:
*F21S 2/00* (2006.01)　　*F21V 9/02* (2006.01)
*F21V 21/30* (2006.01)　　*H01L 31/04* (2014.01)
*F21Y 101/00* (2006.01)

(86) International application number:
**PCT/JP2013/071391**

(87) International publication number:
**WO 2014/050321 (03.04.2014 Gazette 2014/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **27.09.2012 JP 2012213580**

(71) Applicant: **Daikin Industries, Ltd.
Osaka 530-8323 (JP)**

(72) Inventors:
• **SATOH Kazuyuki
Osaka 530-8323 (JP)**
• **MATSUURA, Tetsuya
Osaka 530-8323 (JP)**

(74) Representative: **Hoffmann Eitle
Patent- und Rechtsanwälte PartmbB
Arabellastraße 30
81925 München (DE)**

(54) **PSEUDO SUNLIGHT IRRADIATION APPARATUS AND METHOD FOR EVALUATING SOLAR BATTERY MODULE**

(57) The present invention aims to provide a pseudo sunlight irradiation apparatus capable of artificially reproducing the daily path of the sun and reproducing the daily insolation. A pseudo sunlight irradiation apparatus (10) of the present invention includes a light source (1), a spectrum correction filter (2) configured to make the spectral distribution of light emitted from the light source approximate to the spectral distribution of the sunlight, and a stage (3) configured to mount a sample (5). The stage includes an angle adjuster (6) configured to adjust the incident angle of light applied to the sample.

FIG.2

EP 2 902 695 A1

## Description

TECHNICAL FIELD

The present invention relates to a pseudo sunlight irradiation apparatus and a method of evaluating a solar module.

BACKGROUND ART

A Pseudo sunlight irradiation apparatus (solar simulator) is utilized for performance measurements and accelerated aging tests on solar cells. This pseudo sunlight irradiation apparatus is a light source device that artificially generates pseudo sunlight.

For example, Patent Literature 1 discloses a pseudo sunlight irradiation apparatus that can apply, to a sample, mixed light consisting of artificial sunlight emitted from a main light source and light at a specific wavelength.

CITATION LIST

- Patent Literature

Patent Literature 1: JP H04-133017 A
Patent Literature 2: JP 2010-123682 A

SUMMARY OF INVENTION

- Technical Problem

Conventional pseudo sunlight irradiation apparatuses have been expected to simulate only the case of applying a certain amount of light to a sample perpendicularly. For example, Patent Literature 2 discloses that a light source is arranged so as to imitate the sunlight at noon, and a parallel light beam at an incident angle of about 0 degrees is used as the light source for measuring the efficiency in re-condensation of light (see Fig. 8 of Patent Literature 2).

Since the sun shows the diurnal motion to the rotation of the earth, mere perpendicular application of light to a sample leads to a failure in appropriate evaluation of the performance of a solar module that needs to generate electricity at high efficiency throughout the daytime. Further, cloudy weather reduces the insolation and hardly allows the direct sunlight to reach, so that the most of the reached rays of sunlight are scattered rays of sunlight. Thus, mere perpendicular application of a certain amount of light to a sample leads to a failure in appropriate evaluation of the performance of a solar module that needs to generate electricity at high efficiency even in cloudy weather.

The present invention is devised for the purpose of solving these problems and provides a pseudo sunlight irradiation apparatus capable of artificially reproducing the daily path of the sun and of reproducing the daily insolation. The present invention also provides a pseudo sunlight irradiation apparatus capable of artificially reproducing solar rays in cloudy weather.

- Solution to Problem

A first pseudo sunlight irradiation apparatus of the present invention comprises a light source, a spectrum correction filter configured to make the spectral distribution of light emitted from the light source approximate to the spectral distribution of the sunlight, and a stage configured to mount a sample, the stage comprising an angle adjuster configured to adjust the incident angle of light applied to the sample.

With such a structure, the adjustment of the stage angle enables appropriate adjustment of the incident angle of light applied to a sample mounted on the stage. Thus, the pseudo sunlight irradiation apparatus can artificially reproduce the light of the sun moving in accordance with the diurnal motion. For example, it can reproduce an incident angle of the sunlight at sunrise or the sunlight just before sunset.

The angle adjuster is configured to adjust the incident angle of light applied to the sample mounted on the stage within the range of 0° to 90°, preferably -90° to 90°.

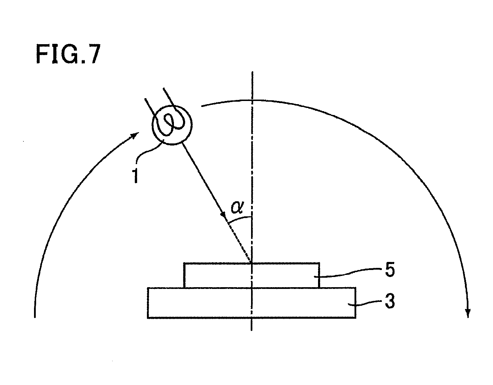

The term "incident angle" herein means, as shown in Fig. 7, an angle $\alpha$ between the optical axis of light emitted from light source 1 and the perpendicular that passes the intersection point of the plane of a sample 5 mounted on stage 3 with the optical axis.

A second pseudo sunlight irradiation apparatus of the present invention comprises a light source, a spectrum correction filter configured to make the spectral distribution of light emitted from the light source approximate to the spectral distribution of the sunlight, a light-source support having the light source and the spectrum correction filter mounted thereon, and a stage configured to mount a sample, the light-source support comprising a position adjuster configured to adjust the position of the light-source support to change the incident angle of light applied to the sample.

With such a structure, the adjustment of the position of the light-source support enables appropriate adjustment of the incident angle of light applied to a sample mounted on the stage. Thus, the pseudo sunlight irradiation apparatus can artificially reproduce the light of the sun moving in accordance with the diurnal motion. For example, it can reproduce an incident angle of the sunlight at sunrise or the sunlight just before sunset.

The position adjuster is configured to adjust the incident angle of light applied to the sample mounted on the stage within the range of 0° to 90°, preferably -90° to 90°.

A third pseudo sunlight irradiation apparatus of the present invention comprises a light source, a spectrum correction filter configured to make the spectral distribution of the light emitted from the light source approximate to the spectral distribution of the sunlight, a stage configured to mount a sample, and a light scatterer disposed between the spectrum correction filter and the stage.

With such a structure, the light scatterer enables artificial reproduction of the sunlight in cloudy weather. Cloudy weather decreases the insolation. The sunlight applied to a solar cell is divided into two types of light, the direct light and the scattered light. In cloudy weather, little direct light reaches the solar cell and the most of the arriving light is the scattered light. Thus, conventional pseudo sunlight irradiation apparatuses fail to appropriately evaluate the performance in cloudy weather of a solar module. On the contrary, the third pseudo sunlight irradiation apparatus of the present invention easily reproduces a low insolation, as well as the scattered light.

In order to reproduce the scattered light with high accuracy, the light scatterer is preferably a haze standard plate. The haze standard plate may have a flat, smooth surface.

The first to third pseudo sunlight irradiation apparatuses of the present invention each preferably comprise two light sources consisting of a first light source and a second light source, the first light source being configured to emit first light beams having predetermined spectral distribution, a first spectrum correction filter disposed opposite to the first light source, the second light source being configured to emit second light beams having spectral distribution different from the first light beams, a second spectrum correction filter disposed opposite to the second light source, and a wavelength-mixing filter configured to receive the first light beams and the second light beams and to mix light beams selected from the incident first light beams and second light beams.

With such a structure, the two light sources can provide light beams with a wide variety of spectral distribution. Thus, the pseudo sunlight irradiation apparatus can easily reproduce light beams having spectral characteristics similar to those of the sunlight.

The pseudo sunlight irradiation apparatus may further comprise a controller configured to switch the light source on and off to allow the light source to emit light beams intermittently at certain time intervals in response to a change in the angle of the stage or the position of the light-source support such that the sample mounted on the stage configured to mount a sample is irradiated with the light beams at any angles intermittently at any intervals.

The pseudo sunlight irradiation apparatus comprising such a controller can automatically reproduce incident angles of the light of the sun moving in accordance with the diurnal motion, so that it can evaluate the output characteristics of a solar module at the respective incident angles.

A first evaluation method of the present invention comprises: irradiating a solar module with light emitted from a light source at an incident angle $\alpha_1$ and then detecting an output current; changing the position of the light source or the angle of the solar module and irradiating the solar module with light at an incident angle $\alpha_2$ that is different from the angle $\alpha_1$, and then detecting an output current; and repeating, any number of times, a cycle of changing the position of the light source or the angle of the solar module, irradiating the solar module with light at an incident angle $\alpha_x$ that is different from the angles $\alpha_1$ and $\alpha_2$ and x is an integer of 3 or greater, and then detecting an output current.

With such a structure, the daily path of the sun and the daily insolation can be reflected in the evaluation conditions. Thus, the method can evaluate the output characteristics of a solar module in conditions similar to those in the generation of electricity by an actually installed solar module.

In the above evaluation method, the incident angles $\alpha_1$, $\alpha_2$, and $\alpha_x$ are adjusted within the range of 0° to 90°, preferably -90° to 90°.

A second evaluation method of the present invention comprises: allowing a light scatterer to disperse light emitted from a light source to reproduce direct light and scattered light from the sun, and irradiating a solar module with the scattered light from the light source and then detecting an output current.

With such a structure, the sunlight in cloudy weather can be reflected in the evaluation conditions. Thus, the method can evaluate the output characteristics of a solar module in conditions similar to those in the generation of electricity by an actually installed solar module in cloudy weather.

- Advantageous Effects of Invention

The first and second pseudo sunlight irradiation apparatuses of the present invention can artificially reproduce the daily path of the sun and can reproduce the daily insolation. The third pseudo sunlight irradiation apparatus of the present invention can artificially reproduce the sunlight in cloudy weather.

The first evaluation method of the present invention can accurately evaluate the output characteristics of a solar module receiving the light of the sun moving in accordance with the diurnal motion. The second evaluation method of the present invention can accurately evaluate the output characteristics of a solar module in cloudy weather.

BRIEF DESCRIPTION OF THE DRAWINGS

Fig. 1 shows one embodiment of the first pseudo sunlight irradiation apparatus of the present invention.
Fig. 2 shows another embodiment of the first pseudo sunlight irradiation apparatus of the present invention.

Fig. 3 shows one embodiment of the second pseudo sunlight irradiation apparatus of the present invention.

Fig. 4 is a drawing for illustrating a pseudo sunlight irradiation apparatus comprising a controller and a detector.

Fig. 5 shows one embodiment of the third pseudo sunlight irradiation apparatus of the present invention.

Fig. 6 shows one embodiment of a pseudo sunlight irradiation apparatus comprising two light sources.

Fig. 7 is a drawing for illustrating the incident angle.

DESCRIPTION OF EMBODIMENTS

The present invention will be described in detail below.

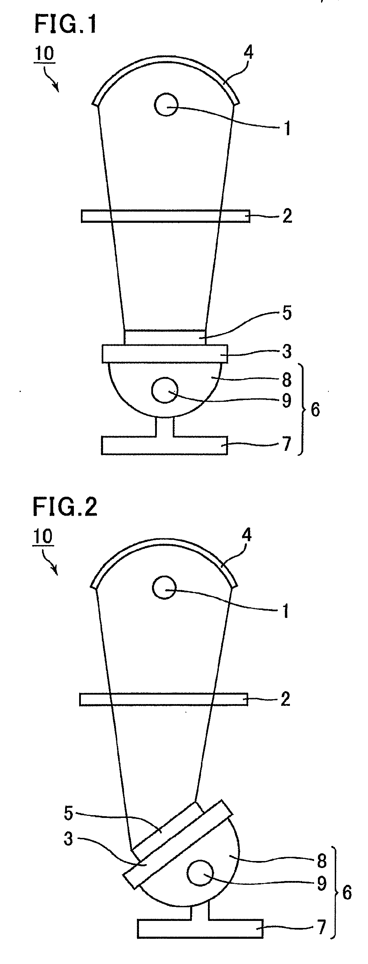

Fig. 1 shows one embodiment of the first pseudo sunlight irradiation apparatus of the present invention. The first pseudo sunlight irradiation apparatus of the present invention comprises light source 1, a spectrum correction filter 2, and stage 3. In a pseudo sunlight irradiation apparatus 10 shown in Fig. 1, light beams emitted from light source 1 reflect on oval mirror 4 and are condensed. The condensed light beams pass through spectrum correction filter 2; this filter selects only the light beams having spectral distribution similar to the spectral distribution of the sunlight. The selected light beams then reach sample 5 mounted on stage 3. Light source 1 may be a xenon light source or a halogen light source.

Stage 3 comprises an angle adjuster 6. Angle adjuster 6 shown in Fig. 1 comprises a body 7, a support 8 that tilts at a predetermined angle from the perpendicular of the body 7, and an engagement screw 9 that rotatably engages the support 8 with the body 7. Stage 3 is fixed on the support 8.

As shown in Fig. 2, the support 8 can move Stage 3 such that the perpendicular of the plane of stage 3 forms an angle of -90° to 90° with the optical axis. Thereby, sample 5 mounted on stage 3 can be irradiated with the artificial sunlight at an angle of -90° to 90°.

In Fig. 2, stage 3 is rotated such that the perpendicular of the plane forms an angle of 90° with an axis that parallels the plane of stage 3 in a specific direction. With such rotation, the pseudo sunlight irradiation apparatus can reproduce the sunlight from the sun right above sample 5 when the perpendicular of the plane of stage 3 corresponds to the optical axis.

The pseudo sunlight irradiation apparatus can also reproduce the path of the sun at a high-latitude location on the earth when stage 3 is placed such that the perpendicular of the plane of stage 3 forms an angle with the optical axis and stage 3 is rotated around an axis in a specific direction that parallels the plane formed by the perpendicular and the optical axis.

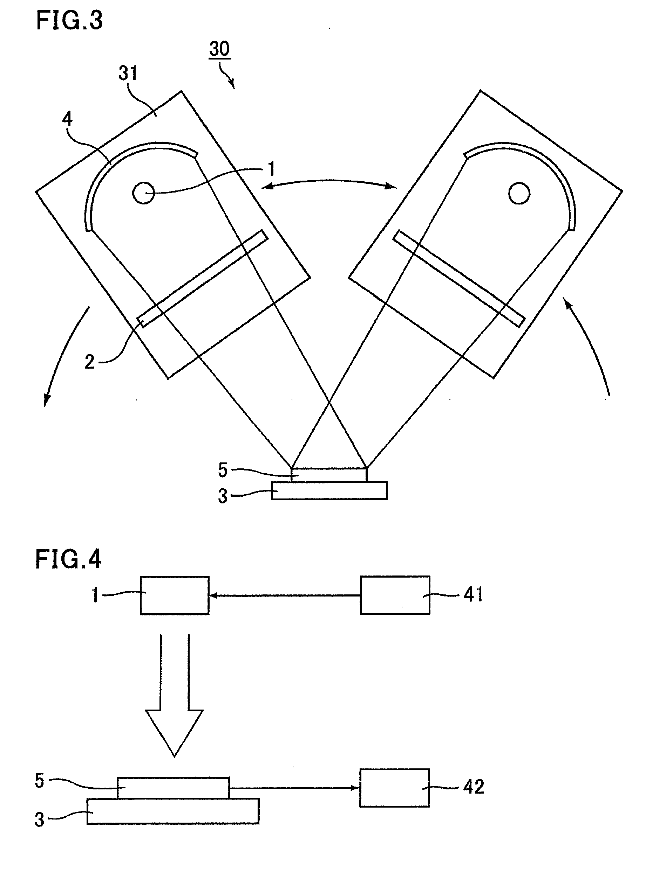

Fig. 3 shows one embodiment of the second pseudo sunlight irradiation apparatus of the present invention. In a pseudo sunlight irradiation apparatus 30 shown in Fig. 3, light source 1 and spectrum correction filter 2 are disposed on light-source support 31, and the position adjuster (not illustrated) disposed on the light-source support 31 can rotate the light-source support 31 around fixed stage 3.

As shown in Fig. 3, the light-source support 31 can be moved such that the perpendicular of the plane of stage 3 forms an angle of -90° to 90° with the optical axis. Thereby, sample 5 mounted on stage 3 can be irradiated with the artificial sunlight at an angle of -90° to 90°.

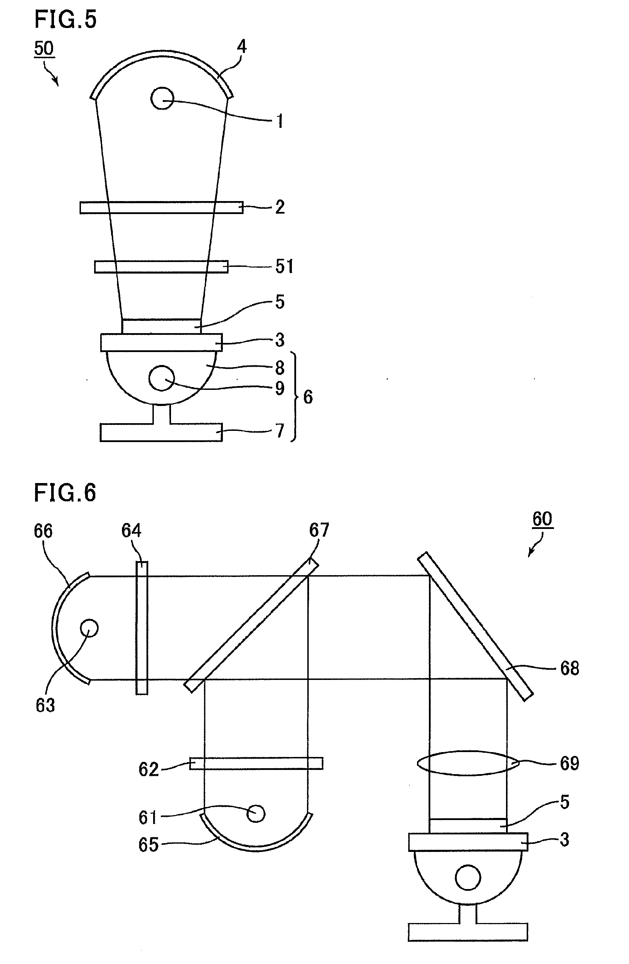

Fig. 5 shows one embodiment of the third pseudo sunlight irradiation apparatus of the present invention. A pseudo sunlight irradiation apparatus 50 shown in Fig. 5 comprises light source 1, spectrum correction filter 2, stage 3, and light scatterer 51 disposed between spectrum correction filter 2 and stage 3. Light scatterer 51 may be disposed between spectrum correction filter 2 and stage 3 as shown in Fig. 3, or may be disposed between light source 1 and spectrum correction filter 2. The light beams emitted from light source 1 reflect on oval mirror 4 and are condensed. The condensed light beams pass through spectrum correction filter 2; this filter selects only the light beams having spectral distribution similar to the spectral distribution of the sunlight. The selected light beams are scattered by light scatterer 51, and the scattered light beams then reach sample 5 mounted on stage 3. Light source 1 may be a xenon light source or a halogen light source.

The pseudo sunlight irradiation apparatus 50 shown in Fig. 5 comprises angle adjuster 6 similarly to the first and second pseudo sunlight irradiation apparatuses of the present invention. Such a structure enables accurate evaluation of the output characteristics of a solar module receiving the light of the sun moving in accordance with the diurnal motion in cloudy weather.

In order to reproduce the scattered light with high accuracy, the light scatterer is preferably a haze standard plate. The haze standard plate may have a flat, smooth surface.

Two or more haze standard plates may be combined with each other. Combination use of two or more haze standard plates enables easier reproduction of desired scattered light. These two or more haze standard plates may have the same haze value or may have different haze values.

In the case of using haze standard plates having different haze values, for example, a haze standard plate having a higher haze value (30% or higher) and a haze standard plate having a lower haze value (lower than 30%) may be combined with each other.

The haze value can be determined in conformity with ISO 14782 "Plastics - Determination of haze for transparent materials" and JIS K 7136 "Plastics -Determination of haze for transparent materials", which is the translated standard based on the above ISO standard.

The haze value (H) is defined as a ratio represented by the following formula:

$$H = Td/Tt \times 100$$

wherein Tt represents the total transmittance and Td represents the diffuse transmittance.

In order to reproduce the sunlight in cloudy weather with high accuracy, light scatterer 51 is preferably disposed such that the optical axis crosses the plane of light scatterer 51 at a right angle.

As shown in Fig. 6, the first to third pseudo sunlight irradiation apparatuses of the present invention may comprise two light sources. Pseudo sunlight irradiation apparatus 60 shown in Fig. 6 comprises light source 61 and light source 63. Spectrum correction filter 62 is disposed opposite to light source 61. Spectrum correction filter 64 is disposed opposite to light source 63. The filters each select light beams having a desired spectral distribution, and the selected light beams reach wavelength-mixing filter 67. Wavelength-mixing filter 67 mixes the light beams having two different spectral distributions to generate artificial sunlight. The artificially synthesized sunlight is reflected on reflecting mirror 68 at a desired angle, and then reach sample 5 through collimator lens 69.

One of light source 61 and light source 63 may be a xenon light source and the other may be a halogen light source. The xenon light source can emit many light beams at short wavelengths required for artificially generating the sunlight. The halogen light source can emit many light beams at long wavelengths required for artificially generating the sunlight.

Wavelength-mixing filter 67 may be a one-way mirror.

Collimator lens 69 has a function of condensing the artificial sunlight, and can adjust the degree of spreading and the intensity of the artificial sunlight.

The first to third pseudo sunlight irradiation apparatuses of the present invention also preferably comprise a controller configured to switch the light source on and off to allow the light source to emit light beams intermittently at certain time intervals such that the sample mounted on the stage configured to mount a sample is irradiated with the light beams at any angles intermittently at any intervals.

A sample for the first to third pseudo sunlight irradiation apparatuses of the present invention may suitably be a solar module. The pseudo sunlight irradiation apparatuses also preferably comprise a detector configured to detect an output current from the solar module.

As shown in Fig. 4, light source 1 is switched on and off by a signal emitted from controller 41, and detector 42 can detect the output current from sample 5 receiving the light emitted from light source 1. Controller 41 can output a signal for adjusting the angle of stage 3 to the angle adjuster. Such a structure allows the light source to emit light beams intermittently at certain intervals in response to a change in the angle of the stage or the position of the light-source support, so that the sample mounted on the stage is irradiated with light beams at any angles intermittently at any intervals. This enables automatic reproduction of the incident angles of the light of the sun moving in accordance with the diurnal motion. As a result, the pseudo sunlight irradiation apparatus can determine the output characteristics of the solar module at any incident angles.

Next described is the first method of evaluating a solar module using the first and second pseudo sunlight irradiation apparatuses of the present invention. When a solar module used as sample 5 is irradiated with the light at an incident angle $\alpha_1$ emitted from the light source, the solar module outputs a current. This output current is detected by detector 42, and the detected value is stored in a storage medium (not illustrated). The incident angle $\alpha_1$ can be adjusted within the range of -90° to 90°.

Then, the position of light source 1 or the angle of the solar module 5 is changed so as to give an incident angle $\alpha_2$. The incident angle $\alpha_2$ may be any angle. Preferably, the angle $\alpha_2$ is adjusted to be larger or smaller than the angle $\alpha_1$, and the angle $\alpha_x$ in the repeated cycle is adjusted to be larger or smaller than both of the angles $\alpha_1$ and $\alpha_2$. This leads to reduction in the cost in terms of time and data processing. The difference between the respective incident angles may be 5°, for example.

After the position of light source 1 or the angle of the solar module 5 is changed, light is applied from the light source to the solar module (sample 5) at an incident angle $\alpha_2$. The output current from the solar module at an incident angle $\alpha_2$ is then detected by the detector 42 and stored in the same manner.

Next, the position of light source 1 or the angle of solar module 5 is adjusted so as to give an incident angle $\alpha_x$ (x represents an integer of 3 or greater), and light is applied from the light source to the solar module (sample 5) at an incident angle $\alpha_x$. The output current from the solar module at an incident angle $\alpha_x$ is detected by detector 42 and stored in the same manner. This cycle is repeated a predetermined number of times, and the output currents are determined at the respective incident angles $\alpha$.

After the above cycle is repeated a predetermined number of times, the evaluation of the output characteristics of the solar module is completed. The more the number of repeated cycles is, the more accurate the evaluation on the output characteristics of the solar module receiving the light of the sun moving in accordance with the diurnal motion is. For example, as the measurement is repeated in every 5 degrees within the range of -90° to 90°, the output characteristics of a solar module can more appropriately be evaluated in consideration of the diurnal motion of the sun. The upper limit of x, in other words, the number of cycles repeated, is not limited. Although the resulting data becomes more specific as the number of times of the cycles repeated increases, such an increase in the number of times of cycles repeated increases the cost in terms of time. Thus, x can appropriately be adjusted in consideration of the balance therebetween. For example, when the incident angle $\alpha_1$ is set to -90° and light is applied at every 5 degrees up to +90° to detect the respective output currents, the upper limit of x is 37.

Next described is a second method of evaluating a solar module using the third pseudo sunlight irradiation apparatus of the present invention. The light emitted from light source 1 is scattered by light scatterer 51 to reproduce the scattered light from the sun, and the scattered light is applied to a solar module (sample 5). Then, the solar module outputs a current. This output current is detected by the detector 42 and stored in a storage medium (not illustrated). Thereby, the output characteristics of the solar module in cloudy weather can accurately be evaluated.

In the second evaluation method, the incident angle $\alpha$ can freely be adjusted within the range of -90° to 90°. For accurate evaluation, it is preferably measured every 1°. As the output current is measured multiple times at any incident angles within the range of -90° to 90°, the output characteristics of the solar module receiving the light of the sun moving in accordance with the diurnal motion in cloudy weather can accurately be evaluated.

REFERENCE SIGNS LIST

1: light source
2: spectrum correction filter
3: stage
4: oval mirror
5: sample
6: angle adjuster
7: body
8: support
9: engagement screw
10, 30, 50, 60: pseudo sunlight irradiation apparatus
31: light-source support
41: controller
42: detector
51: light scatterer
61, 63: light source
62, 64: spectrum correction filter
65, 66: oval mirror
67: wavelength-mixing filter
68: reflecting mirror
69: collimator lens

**Claims**

1. A pseudo sunlight irradiation apparatus comprising a light source,

a spectrum correction filter configured to make the spectral distribution of light emitted from the light source approximate to the spectral distribution of the sunlight, and
a stage configured to mount a sample,
the stage comprising an angle adjuster configured to adjust the incident angle of light applied to the sample.

2. The pseudo sunlight irradiation apparatus according to claim 1,
wherein the angle adjuster is configured to adjust the incident angle of light applied to the sample mounted on the stage within the range of -90° to 90°.

3. A pseudo sunlight irradiation apparatus comprising a light source,
a spectrum correction filter configured to make the spectral distribution of light emitted from the light source approximate to the spectral distribution of the sunlight,
a light-source support having the light source and the spectrum correction filter mounted thereon, and
a stage configured to mount a sample,
the light-source support comprising a position adjuster configured to adjust the position of the light-source support to change the incident angle of light applied to the sample.

4. The pseudo sunlight irradiation apparatus according to claim 3,
wherein the position adjuster is configured to adjust the incident angle of light applied to the sample mounted on the stage within the range of -90° to 90°.

5. A pseudo sunlight irradiation apparatus comprising a light source,
a spectrum correction filter configured to make the spectral distribution of the light emitted from the light source approximate to the spectral distribution of the sunlight,
a stage configured to mount a sample, and
a light scatterer disposed between the spectrum correction filter and the stage.

6. The pseudo sunlight irradiation apparatus according to claim 5,
wherein the light scatterer is a haze standard plate.

7. The pseudo sunlight irradiation apparatus according to claim 1, 2, 3, 4, 5, or 6, comprising
two light sources, the first light source being configured to emit first light beams having predetermined spectral distribution and the second light source being configured to emit second light beams having spectral distribution different from the first light beams,
a first spectrum correction filter disposed opposite to the first light source,
a second spectrum correction filter disposed opposite to the second light source, and
a wavelength-mixing filter configured to receive the first light beams and the second light beams and to mix light beams selected from the incident first light beams and second light beams.

8. The pseudo sunlight irradiation apparatus according to claim 1, 2, 3, 4, 5, 6, or 7, further comprising a controller configured to switch the light source on and off to allow the light source to emit light beams intermittently at certain time intervals such that the sample mounted on the stage configured to mount a sample is irradiated with the light beams at any angles intermittently at any intervals.

9. A method of evaluating a solar module comprising irradiating a solar module with light emitted from a light source at an incident angle $\alpha_1$ and then detecting an output current,
changing the position of the light source or the angle of the solar module and irradiating the solar module with light at an incident angle $\alpha_2$ that is different from the angle $\alpha_1$, and then detecting an output current, and
repeating, any number of times, a cycle of changing the position of the light source or the angle of the solar module, irradiating the solar module with light at an incident angle $\alpha_x$ that is different from the angles $\alpha_1$ and $\alpha_2$ wherein x is an integer of 3 or greater, and then detecting an output current.

10. The method of evaluating a solar module according to claim 9,
wherein the incident angles $\alpha_1$, $\alpha_2$, and $\alpha_x$ are adjusted within the range of -90° to 90°.

11. A method of evaluating a solar module comprising:

   allowing a light scatterer to disperse light emitted from a light source to reproduce direct light and scattered light from the sun, and
   irradiating a solar module with the scattered light from the light source and then detecting an output current.

FIG.1

FIG.2

FIG.3

FIG.4

## FIG.5

## FIG.6

FIG.7

## INTERNATIONAL SEARCH REPORT

| International application No. |
|---|
| PCT/JP2013/071391 |

### A. CLASSIFICATION OF SUBJECT MATTER
*F21S2/00*(2006.01)i, *F21V9/02*(2006.01)i, *F21V21/30*(2006.01)i, *H01L31/04*
(2006.01)i, *F21Y101/00*(2006.01)n

According to International Patent Classification (IPC) or to both national classification and IPC

### B. FIELDS SEARCHED

Minimum documentation searched (classification system followed by classification symbols)
F21S2/00, F21V9/02, F21V21/30, H01L31/04, F21Y101/00

| Documentation searched other than minimum documentation to the extent that such documents are included in the fields searched |
|---|
| Jitsuyo Shinan Koho 1922–1996 Jitsuyo Shinan Toroku Koho 1996–2013 |
| Kokai Jitsuyo Shinan Koho 1971–2013 Toroku Jitsuyo Shinan Koho 1994–2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2010-186890 A (Nisshinbo Holdings Inc.),<br>26 August 2010 (26.08.2010),<br>paragraphs [0052] to [0055]; fig. 9 to 10<br>& WO 2010/093048 A1 & TW 201100693 A | 1-2,8-10<br>3-4,7 |
| Y | JP 2001-127324 A (Mitsubishi Electric Corp.),<br>11 May 2001 (11.05.2001),<br>paragraphs [0014] to [0015]; fig. 6 to 8<br>(Family: none) | 3-4 |
| X | JP 2011-252814 A (Iwasaki Electric Co., Ltd.),<br>15 December 2011 (15.12.2011),<br>paragraphs [0010] to [0018], [0038] to [0043];<br>fig. 8 to 11<br>& WO 2011/151974 A1 & TW 201213787 A | 5-6,11 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>03 October, 2013 (03.10.13) | Date of mailing of the international search report<br>15 October, 2013 (15.10.13) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2013/071391 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2011-233484 A  (Sharp Corp.),<br>17 November 2011 (17.11.2011),<br>paragraphs [0036] to [0052]; fig. 1<br>(Family: none) | 7 |
| A | JP 2012-519276 A  (Tau Science Corp.),<br>23 August 2012 (23.08.2012),<br>entire text; all drawings<br>& US 2010/0219327 A1      & EP 2404179 A<br>& WO 2010/101629 A1      & KR 2011/0124354 A<br>& CN 102341716 A | 11 |
| A | JP 2007-299969 A  (Showa Shell Sekiyu Kabushiki Kaisha),<br>15 November 2007 (15.11.2007),<br>entire text; all drawings<br>& US 2009/0072837 A1      & EP 2023400 A1<br>& WO 2007/129512 A1      & CN 101432891 A<br>& KR 2009/0016450 A      & TW 200802907 A | 11 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04133017 A

- JP 2010123682 A